(19) Europäisches Patentamt

European Patent Office

Office européen des brevets

(11) **EP 2 466 980 A1**

(12) **EUROPEAN PATENT APPLICATION**
published in accordance with Art. 153(4) EPC

(43) Date of publication:
**20.06.2012 Bulletin 2012/25**

(51) Int Cl.:
*H04W 72/08* (2009.01)

(21) Application number: **10821584.9**

(22) Date of filing: **21.09.2010**

(86) International application number:
**PCT/CN2010/077210**

(87) International publication number:
**WO 2011/041975 (14.04.2011 Gazette 2011/15)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **08.10.2009 CN 200910205607**

(71) Applicant: **ZTE Corporation
Shenzhen, Guangdong 518057 (CN)**

(72) Inventors:
• **BI, Feng
Shenzhen
Guangdong 518057 (CN)**
• **YANG, Jin
Shenzhen
Guangdong 518057 (CN)**
• **LIANG, Feng
Shenzhen
Guangdong 518057 (CN)**
• **YUAN, Ming
Shenzhen
Guangdong 518057 (CN)**
• **WU, Shuanshuan
Shenzhen
Guangdong 518057 (CN)**

(74) Representative: **Manitz, Finsterwald & Partner
GbR
Martin-Greif-Strasse 1
80336 München (DE)**

(54) **METHOD AND APPARATUS FOR FEEDING BACK CHANNEL QUALITY INDICATOR OF UPLINK ACCESS LINK**

(57)    The present invention discloses a method for feeding back a channel quality indicator of an uplink access link. The method includes the following steps: a relay node (RN) measures the channel quality indicator (CQI) of an uplink access link; a physical uplink control channel of a relay link (R-PUCCH) bears the CQI of the uplink access link, or a physical uplink shared channel of the relay link (R-PUSCH) bears the CQI of the uplink access link; the RN sends the CQI to a base station. The present invention also discloses an apparatus for feeding back the channel quality indicator of the uplink access link. With the technical scheme of the present invention, the problem that the RN feeds the CQI of the uplink access link back to the base station can be solved, thus the backward compatibility (compatible with the long time evolution (LTE) system) can be ensured, and the technical scheme of the present invention can be adapted for the link from the RN to the base station appropriately. The technical scheme of the present invention has a flexible notifying manner, and facilitates the base station to perform a schedule uniformly.

Relay NodeB (RN) measuring a CQI of an uplink access link

↓

R-PUCCH or R-PUSCH bearing the CQI of the uplink access link

↓

Relay NodeB (RN) transmitting the CQI to a base station

FIG.4

**Description**

Technical Field

The present invention relates to the Long Time Evolution (LTE) system and Long Term Evolution Advanced (LTE-A) system, and more especially, to a technique for feeding back a Channel Quality Indicator (CQI) from a User Equipment (UE) to a Relay NodeB (RN).

Background of the Related Art

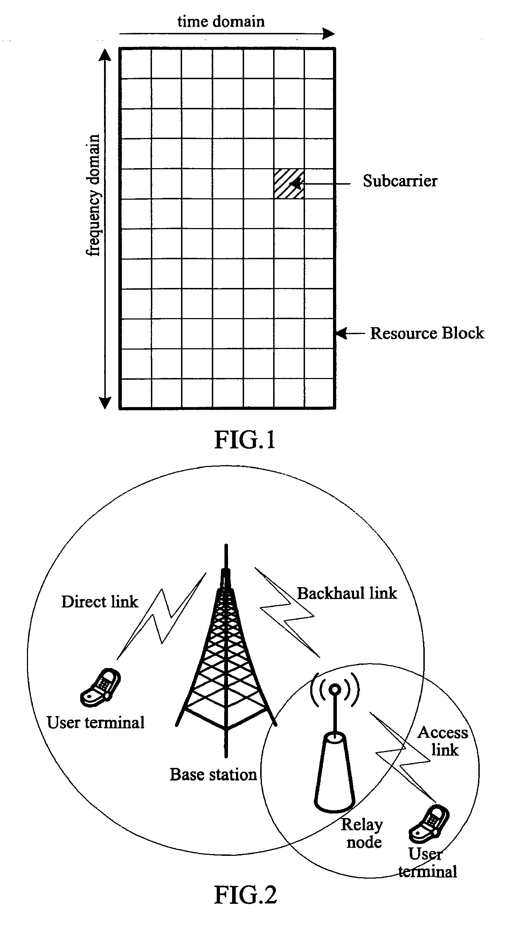

The LTE-A system, LTE-A system and International Mobile Telecommunication Advanced (IMT-Advanced) system are all based on the technique of Orthogonal Frequency Division Multiplexing (OFDM). The OFDM system is mainly in a time-frequency two dimensional data form, and as shown in FIG. 1, in the LTE and LTE-A, a Resource Block (RB, which is called as Physical Resource Block when mapped on the physical resources) is defined as an OFDM symbol in a continuous slot on the time domain, and as 12 or 24 continuous subcarriers on the frequency domain, therefore, one RB is comprised of $N_{symb} \times N_{sc}^{RB}$ Resource Elements (RE), wherein, $N_{symb}$ represents the number of OFDM symbols in a slot, and $N_{sc}^{RB}$ represents the number of the continuous subcarriers of the RB on the frequency domain.

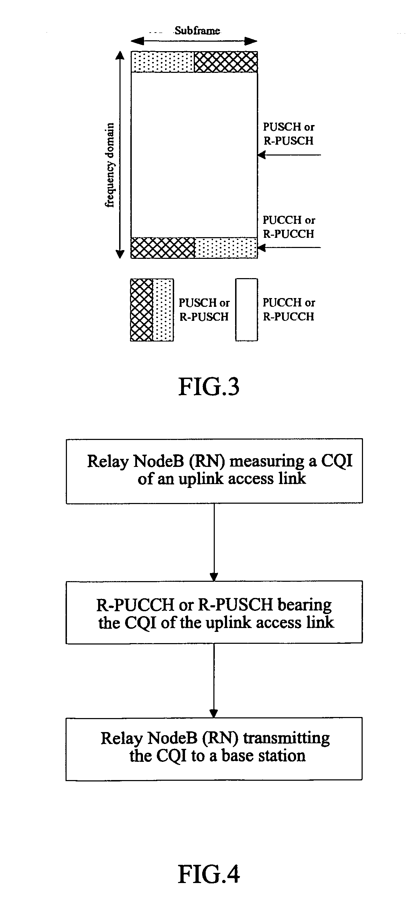

At present, Physical UL Control Channel (PUCCH) in the LTE system is used for bearing Acknowledgement/ Negative Acknowledgement (ACK/NACK) information, CQI and Scheduling Requirement Indicator (SRI) information, and as shown in FIG. 3, wherein the PUCCH or Relay Link Physical UL Control Channel (R-PUCCH) adopts frequency hopping between the slots to perform transmission at the two sides of the uplink frequency band, and transmits Physical UL Shared Channel (IT-PUSCH) or Relay Link Physical UL Shared Channel (R-PUSCH) in the middle. PUCCH or R-PUCCH has different formats as shown in the following table in common, which are used for sending different uplink control information (scheduling requirement, uplink ACK/NACK, CQI feedback or CQI feedback+ACK/NACK).

| PUCCH format | Modulation scheme | Number of bits per subframe, $M_{bit}$ | The sent content |
|---|---|---|---|
| 1 | N/A | N/A | Scheduling Requirement Information (SRI) |
| 1a | BPSK | 1 | ACK/NACK |
| 1b | QPSK | 2 | ACK/NACK |
| 2 | QPSK | 20 | CQI |
| 2a | QPSK+BPSK | 21 | CQI+ ACK/NACK |
| 2b | QPSK+QPSK | 22 | CQI+ ACK/NACK |

New links are added in the LTE-A system after a relay is introduced, as shown in FIG. 2, and the corresponding terms comprise: a link between an eNode-B and a relay is called as a backhaul link or a relay link; a link between a relay and a UE is called as an access link; and a link between an eNode-B and a UE is called as a direct link.

At present, research on the CQI measurement of an uplink access link is a hot spot, for example, the channel quality of an uplink access link is obtained through measuring a Sounding Reference Signal (SRS) transmitted by a terminal in the uplink, and is used for the Relay NodeB or the base station to perform the subsequent uplink resource scheduling. However, the research on how the Relay NodeB feeds back the CQI of the uplink access link to the base station is not carried out and this is the very problem to be solved by the present invention, so that the base station can perform a unified scheduling.

Summary of the Invention

In view of this, the technical problem to be solved by the present invention is to provide a method for feeding back a CQI of an uplink access link, which is very applicable to a link from a Relay NodeB to a base station, and the notification method is flexible.

In order to solve the foregoing technical problem, in one aspect, the present invention provides a method for feeding back a CQI of an uplink access link, which comprises: a Relay NodeB (RN) measuring the Channel Quality Indicator (CQI) of the uplink access link; a Relay Link Physical uplink (UL) Control Channel (R-PUCCH) bearing the CQI of the uplink access link or a Relay Link Physical UL Shared Channel (R-PUSCH) bearing the CQI of the uplink access link; and the RN transmitting the CQI to a base station.

Furthermore, the content borne by the R-PUCCH comprise: only bearing the CQI of the uplink access link; or bearing a combination of the CQI of the uplink access link and a format 1/1a/1b of an uplink relay link; or bearing a combination of the CQI of the uplink access link and a format 2/2a/2b of the uplink relay link; or only bearing a format 1/1a/1b/2/2a/2b of the uplink relay link.

Furthermore, the measuring specifically comprises: the RN performing a quantification processing to the CQI, and deciding a number of bits of the CQI according to a quantized level.

Furthermore, the R-PUSCH bearing comprises: performing a packet transmission of the measured CQI of the uplink access link.

Furthermore, when the quantized CQI is borne by the R-PUCCH, a downlink CQI encoding mode is adopted; when the quantized CQI is borne by the R-PUSCH, a convolutional encoding mode or turbo encoding mode is adopted.

Furthermore, when the R-PUCCH only bears the CQI of the uplink access link, the base station reserves m resources for each RN for bearing the CQI of the uplink access link;

when the R-PUCCH bears the combination of the CQI of the uplink access link and the format 1/1a/1b of the uplink relay link, the base station reserves m resources for each RN, and the format 1/1a/1b can be borne on any one reference signal;

when the R-PUCCH bears the combination of the CQI of the uplink access link and the format 2/2a/2b of the uplink relay link, the base station reserves m+1 resources for the RN, and the format 2/2a/2b can be borne on any one resource;

the R-PUCCH only feeds back the format 1/1a/1b/2/2a/2b of the uplink relay link, and resources can be allocated in a same way as the terminal;

wherein, a value of m is decided by a number of terminals uploading the Sounding Reference Signal (SRS).

Furthermore, bit overhead corresponding to resources allocated to each RN is specifically:

when only the CQI of the uplink access link or the combination of the CQI of the uplink access link and the format 1/1a/1b of the uplink relay link is fed back, the bit overhead can be computed out through a high-level signaling configuration adopting a tree configuration mode, namely adopting a formula $\lceil \log_2 (n \cdot (n+1)/2) \rceil$;

when the combination of the CQI of the uplink access link and the format 2/2a/2b of the uplink relay link is fed back, and m+1 continuous resources are reserved, the bit overhead can be computed out by adopting a formula $\lceil \log_2 (n \cdot (n+1)/2) \rceil$ or $\log_2 (n) + \lceil \log_2(n \cdot (n+1)/2) \rceil$;

when m+1 discontinuous resources are reserved, and an interval between resources of the CQI of the uplink access link and the format 2/2a/2b of the uplink relay link is variable, the bit overhead is computed out by adopting a formula $\log_2(n) + \lceil \log_2 (n \cdot (n+1)/2) \rceil$;

when m+1 discontinuous resources are reserved, and an interval between the resources of the CQI of the uplink access link and the format 2/2a/2b of the uplink relay link is invariable, the bit overhead is computed out by adopting a formula $\log_2(n) + \log_2(m)$;

wherein, $n$ is a total number of CQI resources in the system, "$\lceil \ \rceil$" represents rounded up, $m$ is a number of CQI resources of the uplink access link allocated to each RN in the system.

Furthermore, a sequence of the CQI of the uplink access link corresponding to each terminal corresponds to Cell-Radio Network Temporary Identifier (C-RNTI) information of the terminal or Sounding Reference Signal (SRS) information of the terminal.

Furthermore, the one CQI resource corresponds to one resource index, and the RN maps the CQI onto a corresponding resource according to the resource index.

A method for feeding back a channel quality indicator (CQI) of a downlink access link in a TDD system, which comprises:

a RN measuring the CQI of an uplink access link;
the RN acquiring the CQI of the downlink access link by utilizing channel reciprocity;
a Relay Link Physical UL Control Channel (R-PUCCH) bearing the CQI of the downlink access link or a Relay Link Physical UL Shared Channel (R-PUSCH) bearing the CQI of the downlink access link;
the RN transmitting the CQI to a base station.

In another aspect, the present invention further provides a device for feeding back a Channel Quality Indicator (CQI) of an uplink access link, which comprises: a measurement module, which is configured to measure the CQI of the uplink access link; a bearing module, which is configured to bear the CQI of the uplink access link; and a transmission module, which is configured for a Relay NodeB (RN) to transmit the CQI to a base station.

Furthermore, the bearing module comprises a Relay Link Physical uplink (UL) Control Channel (R-PUCCH) bearing module.

Furthermore, the bearing module further comprises a Relay Link Physical UL Shared Channel (R-PUSCH) bearing module.

Furthermore, the content borne by the R-PUCCH bearing module comprises: only bearing the CQI of the uplink access link; or bearing a combination of the CQI of the uplink access link and format 1/1a/1b of an uplink relay link; or bearing a combination of the CQI of the uplink access link and format 2/2a/2b of the uplink relay link; or only bearing format 1/1a/1b/2/2a/2b of the uplink relay link.

Furthermore, the content borne by the R-PUSCH bearing module comprises: performing a packet transmission of the measured CQI of the uplink access link.

After adopting the method of the present invention, the problem of the RN feeding back the CQI of an uplink access link to a base station is solved, i.e., the backward compatibility (compatible with a LTE system) is ensured. The present invention is very applicable to the links from the RN to the base station, and the notification method is flexible, which can facilitate unified scheduling of the base station.

Brief Description of Drawings

FIG. 1 is a schematic diagram of the resource block and subcarrier;

FIG. 2 is a structural schematic diagram of the system;

FIG. 3 is a schematic diagram of the mapping of PUCCH or R-PUCCH and PUSCH or R-PUSCH;

FIG. 4 is a flowchart of the method for feeding back a CQI of an uplink access link according to the present invention;

FIG. 5 is a schematic diagram for reserving $m$ continuous CQI resources;

FIG. 6 is a schematic diagram for reserving $m + 1$ continuous CQI resources;

FIG. 7 is a schematic diagram where $m + 1$ discontinuous CQI resources are reserved, and the interval between the resources of the CQI of the uplink access link and the format 2/2a/2b of the uplink relay link is variable;

FIG. 8 is a schematic diagram where $m + 1$ discontinuous CQI resources are reserved, and the interval between the resources of the CQI of the uplink access link and the format 2/2a/2b of the uplink relay link is invariable;

FIG. 9 is a schematic diagram of the combination of the CQI of the uplink access link and the format 1/1a/1b of the uplink relay link;

FIG. 10 is a schematic diagram of the CQI of the uplink access link performing packet transmission;

FIG. 11 is a structural schematic diagram of the device for feeding back a CQI of an uplink access link according to the present invention.

Preferred Embodiments of the Present Invention

The flow chart of the method for feeding back the CQI of an uplink access link according to the present invention is shown in FIG. 4: the Relay NodeB (RN) measures the CQI of the uplink access link, and then the R-PUCCH bears the CQI of the uplink access link or R-PUSCH bears the CQI of the uplink access link; and then the RN transmits the CQI to the base station, thereby implementing the feedback of the CQI of the uplink access link.

The specific embodiments of the present invention will be described below in combination with the drawings and specific examples.

The m mentioned hereinafter is the number of CQI resources of the uplink access link allocated to each RN in the system, and the value of m is decided by the number of terminals uploading the SRS.

Example 1

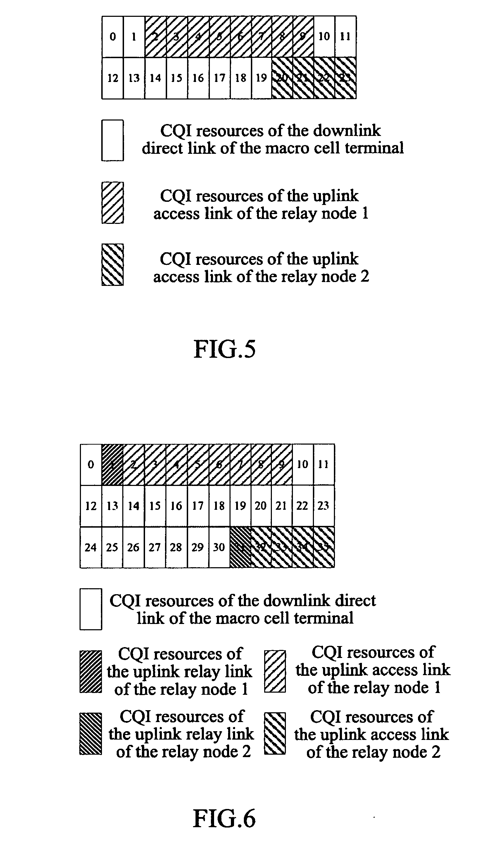

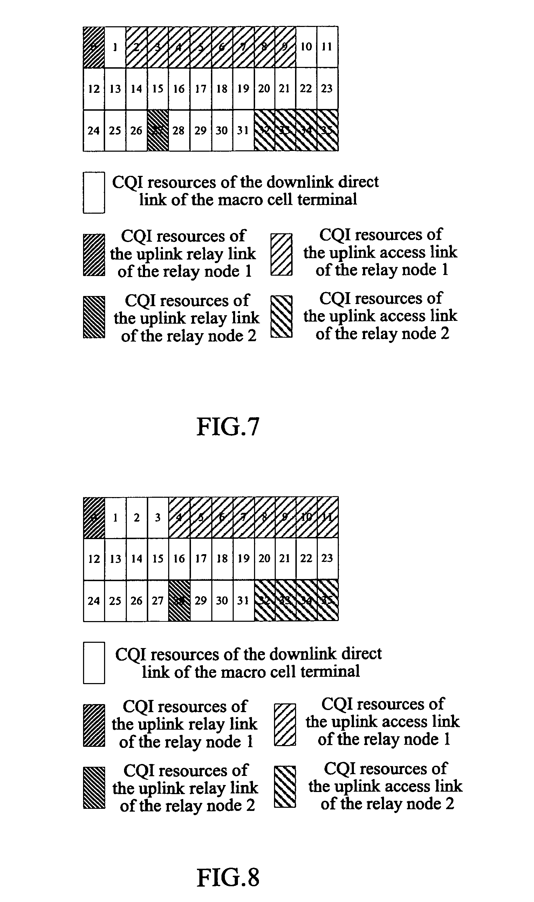

When the R-PUCCH only bears the CQI of an uplink access link, the base station needs to reserve m resources for the RN for bearing the CQI of the uplink access link. FIG. 5 is a schematic diagram of reserving m continuous CQI resources for each RN, and as shown in FIG. 5, 8 continuous CQI resources are reserved for RN1, 4 continuous CQI resources are reserved for RN2, only the CQI of the uplink access link is borne, and the total number of the resource blocks bearing the CQI is decided according to the number of resources needed by the system in total. It is assumed that $N_{\mathrm{RB}}^{(2)} = 2$ at the moment, the number of the subcarriers of each resource block in the frequency direction is $N_{\mathrm{sc}}^{\mathrm{RB}} = 12$ (when the subcarrier interval is 15kHz, $N_{\mathrm{sc}}^{\mathrm{RB}} = 12$; when the subcarrier interval is 7.5kHz, $N_{\mathrm{sc}}^{\mathrm{RB}} = 24$), then there are $N_{\mathrm{RB}}^{(2)} N_{\mathrm{sc}}^{\mathrm{RB}} = 24$ resources used for transmitting the CQI in total.

The bit overhead corresponding to the resources allocated to each RN can be computed out through the high-level signaling configuration by using the tree configuration mode, namely using the formula $\lceil \log_2 (n \cdot (n+1)/2 \rceil$ Wherein $n$ is the total number of resources in the system, the system has 24 resources in total at the moment, "⌈ ⌉" represents rounded up, and the obtained value is 9, then the bit overhead needed in total is 2×9 bits (2 is the number of RNs as shown in the Figure), and as shown in the figure, resource indexes "2" to "9" bear the CQI of the uplink access link of RN1, resource indexes "20" to "23" bear the CQI of the uplink access link of RN2, and the rest CQI resources to which no index is allocated are allocated to terminals of a macro cell.

The downlink CQI encoding mode, namely the encoding of (20, A), is adopted for the above quantized CQI, and the RN decides the number of bits of the CQI according to the quantized levels. For example, the quantization level in the example is 16 (decided according to the CQI precision), and the corresponding A equals to 4bits, then the encoded A is 20 bits, and the 20 bits are mapped onto the corresponding resources after modulation and transmitted by the RN to the base station.

Example 2

When the R-PUCCH bears the combination of the CQI of the uplink access link and the format 2/2a/2b of the uplink relay link, the base station needs to reserve $m + 1$ resources for each RN, and the format 2/2a/2b can be borne on any one resource at the moment. Preferably, the first resource bears the format 2/2a/2b of the uplink relay link, and the other $m$ resources bear the CQI of the uplink access link.

FIG. 6 is the schematic diagram for reserving m+1 continuous CQI resources for each RN, and as shown in FIG. 6, m+1=8+1 continuous CQI resources are reserved for RN 1, m+1=4+1 continuous CQI resources are reserved for RN2, the CQI of the uplink access link and the format 2/2a/2b of the uplink relay link are fed back, and the number of resource blocks bearing the CQI is decided according to the number of resources needed by the system in total. It is assumed that $N_{\mathrm{RB}}^{(2)} = 3$ at the moment, and the number of the subcarriers of each resource block in the frequency direction is $N_{\mathrm{sc}}^{\mathrm{RB}} = 12$, there are $N_{\mathrm{RB}}^{(2)} N_{\mathrm{sc}}^{\mathrm{RB}} = 36$ resources in total used for transmitting the CQI.

The bit overhead corresponding to the resources allocated to each RN can be computed out through the high-level signaling configuration by using the tree configuration mode, namely using the formula $\lceil \log_2(n \cdot (n+1)/2 \rceil$, wherein $n$ is the total number of CQI resources in the system, "⌈ ⌉" represents rounded up, the system has 36 resources in total at the moment, and the obtained value is 10 bits, then the bit overhead needed in total is 2×10 bits (2 is the number of RNs as shown in the figure), and the base station decides the resource index allocated to each RN. As shown in the figure, resource indexes "1" to "9" bear the CQI of the uplink access link of RN1, and it is agreed by the base station and relay that preferably the resource index "1" bears the format 2/2a/2b of the uplink relay link of RN1, resource indexes "2" to "9" bear the CQI of the uplink access link of RN1, and resource indexes "31" to "35" bear the CQI of the uplink access link of RN2, wherein the resource index "31" bears the format 2/2a/2b of the uplink relay link of RN2, resource indexes "32" to "35" bear the CQI of the uplink access link of RN 2, and the rest CQI resources corresponding to the resource indexes which are not allocated to the relay are allocated to terminals of a macro cell.

The above bit overhead corresponding to the resources allocated to each RN can further be computed out through the formula $\log_2(n) + \lceil \log_2(n \cdot (n+1)/2$.

The subsequent processing is the same as in the example 1, which will not be repeated here.

Example 3

When the R-PUCCH bears the combination of the CQI of the uplink access link and the format 2/2a/2b of the uplink relay link, the base station needs to reserve $m + 1$ resources for each RN, and the format 2/2a/2b can be borne on any one resource at the moment. Preferably, the first resource bears the format 2/2a/2b of the uplink relay link, and the other $m$ resources bear the CQI of the uplink access link.

As shown in FIG. 7, $m + 1$ idiscontinuous CQI resources for feeding back the CQI of the uplink access link and the format 2/2a/2b of the uplink relay link are reserved for each RN, and the interval between the resources of the CQI of the uplink access link and th format 2/2a/2b of the uplink relay link is variable, as in the FIG. 7, m+1=8+1 discontinuous CQI resources are reserved for RN1, m+1=4+1 discontinuous CQI resources are reserved for RN2, wherein the number of the resource blocks bearing the CQI is decided according to the number of resources needed by the system in total.

It is assumed that $N_{RB}^{(2)} = 3$ at the moment, and the number of the subcarriers of each resource block in the frequency direction is $N_{sc}^{RB} = 12$, then there are $N_{RB}^{(2)} N_{sc}^{RB} = 36$ resources in total used for transmitting the CQI.

The bit overhead corresponding to the resources allocated to each RN can be computed out through the formula $\log_2(n)+\lceil\log_2(n\cdot(n+1)/2\rceil$, wherein $n$ is the total number of resources in the system, the system has 36 resources in total at the moment, "⌈ ⌉" represents rounded up, and the obtained value is (6+10) bits, then the bit overhead totally needed is $2\times(6+10)$ bits (2 is the number of RNs as shown in the figure), the base station decides the resource index allocated to each RN, as shown in the Figure, wherein resource index "0" bears the format 2/2a/2b of the uplink relay link of RN1, resource indexes "2" to "9" bear the CQI of the uplink access link of RN1, the interval of the two is one resource index; and wherein resource index "27" bears the format 2/2a/2b of the uplink relay link of RN2, resource indexes "32" to "35" bear the CQI of the uplink access link of RN2, the interval of the two is 4 resource indexes, and the rest CQI resources are allocated to the terminals of a macro cell.

The subsequent processing is the same as in the example 1, which will not be repeated here.

Example 4

When the R-PUCCH bears the combination of the CQI of the uplink access link and the format 2/2a/2b of the uplink relay link, the base station needs to reserve $m$+1 resource for each RN, and the format 2/2a/2b can be borne on any one resource at the moment. Preferably, the first resource bears the format 2/2a/2b of the uplink relay link, and the other $m$ resources bear the CQI of the uplink access link.

As shown in FIG. 8, a combination of $m + 1$ discontinuous CQI resources of the uplink access link and the format 2/2a/2b of the uplink relay link is reserved for each RN, and the interval between the CQI resources of the uplink access link and the format 2/2a/2b of the uplink relay link is invariable, as in the FIG. 8, m+1=8+1 discontinuous CQI resources are reserved for RN1, m+1=4+1 discontinuous CQI resources are reserved for RN2, the total number of resource blocks bearing the CQI is decided according to the number of resources needed by the system in total. It is assumed that $N_{RB}^{(2)} = 3$ at the moment, and the number of the subcarriers of each resource block in the frequency direction is $N_{sc}^{RB} = 12$, then there are $N_{RB}^{(2)} N_{sc}^{RB} = 36$ in total used for transmitting the CQI.

The bit overhead corresponding to the resources allocated to each RN can be computed out through the formula $\log_2(n)+\log_2(m)$, wherein $n$ is the total number of resources in the system, the system has 36 resources in total at the moment, $m$ is the number of the CQI resources of the uplink access link (at the moment, the system has 2 RNs, for which 8 and 4 resources are allocated respectively) allocated to each RN in the system, the bit overhead needed is ( 6+3 ) bits and ( 6+2 ) bits, and the base station decides the resource index allocated to each RN, as shown in the figure, wherein resource index "0" bears the format 2/2a/2b of the uplink relay link of RN1, resource indexes "4" to "11" bear the CQI of the uplink access link of RN1, and the interval of the two is 2 resource indexes; and wherein resource index "28" bears the format 2/2a/2b of the uplink relay link of RN2, resource indexes "32" to "35" bear the CQI of the uplink access link of RN2, the interval of the two is two resource indexes, and the rest CQI resources are allocated to the terminals of a macro cell.

The subsequent processing is the same as in the example 1, which will not be repeated here.

Example 5

When the R-PUCCH bears the combination of the CQI of the uplink access link and the format 1/1a/1b of the uplink relay link, the base station needs to reserve $m$ resources for the RN, the format 1/1a/1b can be borne on any one reference signal, and preferably, can be borne on the reference signal corresponding to the second CQI resource of the uplink access link.

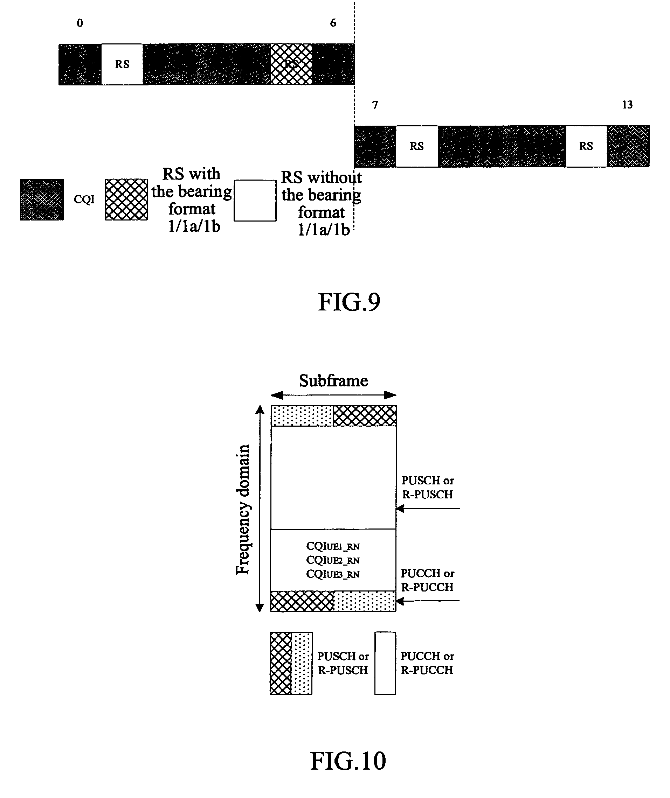

As shown in FIG. 9, when bearing the combination of the CQI of the uplink access link and the format 1/1a/1b of the uplink relay link, the base station needs to reserve the corresponding resources used for bearing the CQI of the uplink access link (in the same bearing way as in example 1, which will not be repeated here), the format 1/1a/1b of the uplink relay link is borne on the second reference signal of the first slot at the moment, and the other reference signals do not bear feedback information.

Example 6

When the R-PUCCH bears the format 1/1a/1b/2/2a/2b of the uplink relay link, resources may be allocated in the way as for the terminal, which is the same with the related art and thus will not be repeated here.

Example 7

FIG. 10 is the schematic diagram of the CQI of the uplink access link performing the packet transmission, at which moment resources may not be reserved for the CQI of the uplink access link, and the CQI is borne by the Relay Link Physical UL Shared Channel (R-PUSCH). The CQI sequence of the uplink access link corresponding to each terminal corresponds to the Cell-Radio Network Temporary Identifier (C-RNTI) information of the terminal or Sounding Reference Signal (SRS) information of the terminal. As shown in FIG. 10, the RN sequences the measured C-RNTIs corresponding to the terminals in ascending order, connects the $CQI_{UEI\_RN}$, $CQI_{UE2-RN}$ and $CQI_{UE3\_RN}$ in series according to the sequence, and then the $CQI_{UE1\_RN}$, $CQI_{UE2\_RN}$ and $CQI_{UE3\_RN}$ together are subjected to convolutional encoding mode or turbo encoding followed by processing such as constellation modulation, and are borne on the R-PUSCH.

Those skilled in the art should understand that the foregoing method is also applicable to the method for feeding back a channel quality indicator of a downlink access link in the TDD system, which is specifically: a RN measuring the CQI of an uplink access link, the RN acquiring the CQI of a downlink access link by utilizing channel reciprocity; a Relay Link Physical UL Control Channel (R-PUCCH) bearing the CQI of the downlink access link or a Relay Link Physical UL Shared Channel (R-PUSCH) bearing the CQI of the downlink access link; and the RN transmitting the CQI to a base station. Since the specific feedback mode is exactly the same as in the foregoing examples except that the CQI of the downlink access link is acquired, , its implementation details will not be repeated in the present invention.

Example of the device

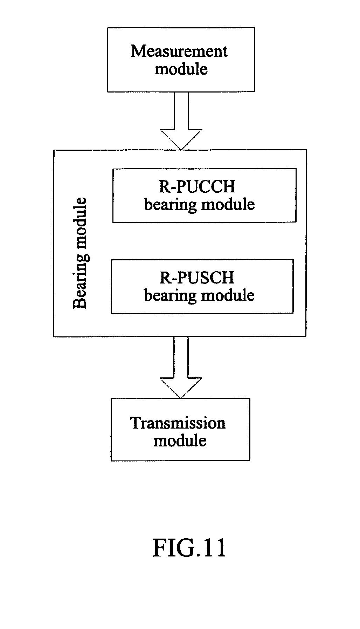

FIG. 11 is the structural schematic diagram of the device for feeding back a CQI of an uplink access link according to the present invention, as shown in FIG. 11, which comprises: a measurement module, a bearing module and a transmission module, wherein, the measurement module is used for measuring the Channel Quality Indicator (CQI) of the uplink access link; the bearing module is used for bearing the CQI of the uplink access link; and the transmission module is used for the RN to transmit the CQI to the base station.

Wherein, the bearing module can be a Relay Link Physical UL Control Channel (R-PUCCH) bearing module; and can further be a Relay Link Physical UL Shared Channel (R-PUSCH) bearing module. Wherein, the content borne by the R-PUCCH bearing module comprises: only bearing the CQI of the uplink access link; or bearing a combination of the CQI of the uplink access link and a format 1/1a/1b of an uplink relay link; or bearing a combination of the CQI of the uplink access link and a format 2/2a/2b of the uplink relay link; or only bearing the format 1/1a/1b/2/2a/2b of the uplink relay link. The content borne by the R-PUSCH bearing module comprises: performing packet transmission of the measured CQI of the uplink access link.

The principle of the present invention has been described in the above details, which, however, are just several examples taken to facilitate understanding and do not constitute a limitation to the protection scope of the present invention. Without departing from the spirit and essence of the present invention, those skilled in the art can make various corresponding changes and transformations according to the present invention, and these corresponding changes and transformations all fall into the protection scope of the claims attached to the present invention.

**Claims**

1.    A method for feeding back a channel quality indicator of an uplink access link, comprising:

> a Relay NodeB (RN) measuring the Channel Quality Indicator (CQI) of the uplink access link;
> a Relay Link Physical uplink (UL) Control Channel (R-PUCCH) bearing the CQI of the uplink access link or a Relay Link Physical UL Shared Channel (R-PUSCH) bearing the CQI of the uplink access link;
> the RN transmitting the CQI to a base station.

2.    The method according to claim 1, wherein, the R-PUCCH only bears the CQI of the uplink access link; or bears a combination of the CQI of the uplink access link and a format 1/1a/1b of an uplink relay link; or bears a combination of the CQI of the uplink access link and a format 2/2a/2b of the uplink relay link; or only bears a format 1/1a/1b/2/2a/2b of the uplink relay link.

3. The method according to claim 1, wherein, the measuring specifically comprises: the RN performing a quantification processing to the CQI, and deciding a number of bits of the CQI according to a quantized level.

4. The method according to claim 1, wherein, the R-PUSCH bearing comprises: performing a packet transmission of the measured CQI of the uplink access link.

5. The method according to claim 3, wherein, when the quantized CQI is borne by the R-PUCCH, a downlink CQI encoding mode is adopted; when the quantized CQI is borne by the R-PUSCH, a convolutional encoding mode or turbo encoding mode is adopted.

6. The method according to claim 2, wherein, when the R-PUCCH only bears the CQI of the uplink access link, the base station reserves m resources for each RN for bearing the CQI of the uplink access link;
when the R-PUCCH bears the combination of the CQI of the uplink access link and the format 1/1a/1b of the uplink relay link, the base station reserves m resources for each RN, and the format 1/1a/1b can be borne on any one reference signal;
when the R-PUCCH bears the combination of the CQI of the uplink access link and the format 2/2a/2b of the uplink relay link, the base station reserves m+1 resources for the RN, and the format 2/2a/2b can be borne on any one resource;
when the R-PUCCH only feeds back the format 1/1a/1b/2/2a/2b of the uplink relay link, the resources can be allocated in a same way as the terminal;
wherein, a value of m is decided by a number of terminals uploading a Sounding Reference Signal (SRS).

7. The method according to claim 6, wherein, bit overhead corresponding to the resources reserved for each RN is specifically:

when only the CQI of the uplink access link is fed back, or the combination of the CQI of the uplink access link and the format 1/1a/1b of the uplink relay link is fed back, the bit overhead can be computed out, through a high-level signaling configuration, by adopting a tree configuration mode, namely adopting a formula $\lceil \log_2(n \cdot (n+1)/2) \rceil$;
when the combination of the CQI of the uplink access link and the format 2/2a/2b of the uplink relay link is fed back, and m+1 continuous resources are reserved, the bit overhead can be computed out by adopting a formula $\lceil \log_2(n \cdot (n+1)/2) \rceil$ or $\log_2(n) + \lceil \log_2(n \cdot (n+1)/2) \rceil$,
when m+1 discontinuous resources are reserved, and an interval between the resource of the CQI of the uplink access link and the resource of the format 2/2a/2b of the uplink relay link is variable, the bit overhead is computed out by adopting a formula $\log_2(n) + \lceil \log_2(n \cdot (n+1)/2) \rceil$,
when m+1 discontinuous resources are reserved, and an interval between the resource of the CQI of the uplink access link and the resource of the format 2/2a/2b of the uplink relay link is invariable, the bit overhead is computed out by adopting a formula $\log_2(n) + \log_2(m)$;
wherein, $n$ is a total number of CQI resources in the system, "$\lceil \rceil$" represents rounded up, $m$ is a number of CQI resources of the uplink access link allocated to each RN in the system.

8. The method according to claim 4, wherein, a sequence of the CQI of the uplink access link corresponding to each terminal corresponds to Cell-Radio Network Temporary Identifier (C-RNTI) information of the terminal or Sounding Reference Signal (SRS) information of the terminal.

9. The method according to any one of claims 1 to 8, wherein, the one CQI resource corresponds to one resource index, and the RN maps the CQI onto a corresponding resource according to the resource index.

10. A method for feeding back a channel quality indicator (CQI) of a downlink access link in a Time Division Duplex (TDD) system, comprising:

a RN measuring the CQI of an uplink access link;
the RN acquiring the CQI of the downlink access link by utilizing channel reciprocity;
a Relay Link Physical UL Control Channel (R-PUCCH) bearing the CQI of the downlink access link or a Relay Link Physical UL Shared Channel (R-PUSCH) bearing the CQI of the downlink access link;

the RN transmitting the CQI to a base station.

11. A device for feeding back a Channel Quality Indicator (CQI) of an uplink access link, comprising:

a measurement module, which is configured to measure the CQI of the uplink access link;
a bearing module, which is configured to bear the CQI of the uplink access link;
a transmission module, which is configured for a Relay NodeB (RN) to transmit the CQI to a base station.

12. The device according to claim 11, wherein, the bearing module comprises a Relay Link Physical uplink (UL) Control Channel (R-PUCCH) bearing module.

13. The device according to claim 11, wherein, the bearing module further comprises a Relay Link Physical UL Shared Channel (R-PUSCH) bearing module.

14. The device according to claim 12, wherein, content borne by the R-PUCCH bearing module comprises: only bearing the CQI of the uplink access link; or bearing a combination of the CQI of the uplink access link and format 1/1a/1b of an uplink relay link; or bearing a combination of the CQI of the uplink access link and format 2/2a/2b of the uplink relay link; or only bearing format 1/1a/1b/2/2a/2b of the uplink relay link.

15. The device according to claim 12, wherein, content borne by the R=PUSCH bearing module comprises: performing a packet transmission of the measured CQI of the uplink access link.

FIG.1

FIG.2

Subframe

frequency domain

PUSCH or
R-PUSCH

PUCCH or
R-PUCCH

PUSCH or
R-PUSCH

PUCCH or
R-PUCCH

# FIG.3

Relay NodeB (RN) measuring a CQI
of an uplink access link

R-PUCCH or R-PUSCH bearing
the CQI of the uplink access link

Relay NodeB (RN) transmitting
the CQI to a base station

# FIG.4

| 0 | 1 | 2 | 3 | 4 | 5 | 6 | 7 | 8 | 9 | 10 | 11 |
| 12 | 13 | 14 | 15 | 16 | 17 | 18 | 19 | 20 | 21 | 22 | 23 |

☐ CQI resources of the downlink
direct link of the macro cell terminal

▨ CQI resources of the uplink
access link of the relay node 1

▧ CQI resources of the uplink
access link of the relay node 2

## FIG.5

| 0 | 1 | 2 | 3 | 4 | 5 | 6 | 7 | 8 | 9 | 10 | 11 |
| 12 | 13 | 14 | 15 | 16 | 17 | 18 | 19 | 20 | 21 | 22 | 23 |
| 24 | 25 | 26 | 27 | 28 | 29 | 30 | 31 | 32 | 33 | 34 | 35 |

☐ CQI resources of the downlink direct
link of the macro cell terminal

▨ CQI resources of
the uplink relay link
of the relay node 1

▨ CQI resources of
the uplink access link
of the relay node 1

▧ CQI resources of
the uplink relay link
of the relay node 2

▧ CQI resources of
the uplink access link
of the relay node 2

## FIG.6

| | 1 | 2 | 3 | 4 | 5 | 6 | 7 | 8 | 9 | 10 | 11 |
|---|---|---|---|---|---|---|---|---|---|---|---|
| 12 | 13 | 14 | 15 | 16 | 17 | 18 | 19 | 20 | 21 | 22 | 23 |
| 24 | 25 | 26 | | 28 | 29 | 30 | 31 | | | | |

☐ CQI resources of the downlink direct link of the macro cell terminal

▨ CQI resources of the uplink relay link of the relay node 1

▧ CQI resources of the uplink access link of the relay node 1

▨ CQI resources of the uplink relay link of the relay node 2

▨ CQI resources of the uplink access link of the relay node 2

## FIG.7

| | 1 | 2 | 3 | 4 | 5 | 6 | 7 | 8 | 9 | 10 | 11 |
|---|---|---|---|---|---|---|---|---|---|---|---|
| 12 | 13 | 14 | 15 | 16 | 17 | 18 | 19 | 20 | 21 | 22 | 23 |
| 24 | 25 | 26 | 27 | | 29 | 30 | 31 | | | | |

☐ CQI resources of the downlink direct link of the macro cell terminal

▨ CQI resources of the uplink relay link of the relay node 1

▧ CQI resources of the uplink access link of the relay node 1

▨ CQI resources of the uplink relay link of the relay node 2

▨ CQI resources of the uplink access link of the relay node 2

## FIG.8

13

**FIG.9**

**FIG.10**

Measurement
module

Bearing module

R-PUCCH
bearing module

R-PUSCH
bearing module

Transmission
module

FIG.11

# INTERNATIONAL SEARCH REPORT

| | International application No. |
|---|---|
| | PCT/CN2010/077210 |

**A. CLASSIFICATION OF SUBJECT MATTER**

H04W 72/08 (2009.01)i

According to International Patent Classification (IPC) or to both national classification and IPC

**B. FIELDS SEARCHED**

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

CNKI, CPRSABS, WPI, EPODOC: link?, channel?, connection?, quality, indicat+, feedback, CQI, channel quality indicator, relay, node?, base station, PUCCH, PUSCH

**C. DOCUMENTS CONSIDERED TO BE RELEVANT**

| Category* | Citation of document, with indication, where appropriate, of the relevant passages | Relevant to claim No. |
|---|---|---|
| X | WO2008051061A1 （ELECTRONICS&TELECOM RES INST [KR] et al.） 02 May 2008 （02.05.2008） Page 5 line 22 to page 7 line 18 of the description, claims 1-14, abstract, figures 1-4, 18 | 11 |
| A | | 1-10,12-15 |
| X | CN101385371A （LG ELECTRONICS INC） 11 Mar. 2009 （11.03.2009） Page 23 line 3 to page 24 line 22 of the description, claims 1-17, abstract, figure 9 | 11 |
| A | | 1-10,12-15 |
| A | CN101389113A （ZTE CO LTD） 18 Mar. 2009 （18.03.2009） The whole document | 1-15 |

☐ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 Nov. 2010 (29.11.2010) | **23 Dec. 2010 (23.12.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | LV, Sihua Telephone No. (86-10)62411386 |

Form PCT/ISA /210 (second sheet) (July 2009)

## INTERNATIONAL SEARCH REPORT
Information on patent family members

| International application No. |
| --- |
| PCT/CN2010/077210 |

| Patent Documents referred in the Report | Publication Date | Patent Family | Publication Date |
| --- | --- | --- | --- |
| WO2008051061A1 | 02.05.2008 | KR20080038071A | 02.05.2008 |
| | | US2010075663A1 | 25.03.2010 |
| CN101385371A | 11.03.2009 | WO2007055544A2 | 18.05.2007 |
| | | KR20070050707A | 16.05.2007 |
| | | KR20070075748A | 24.07.2007 |
| | | EP1955561A2 | 13.08.2008 |
| | | WO2007055544A3 | 28.08.2008 |
| | | JP2009515463T | 09.04.2009 |
| | | CA2626895A1 | 18.05.2007 |
| | | US2009219852A1 | 03.09.2009 |
| CN101389113A | 18.03.2009 | None | |

Form PCT/ISA /210 (patent family annex) (July 2009)